# EUROPÄISCHE PATENTANMELDUNG

(11) **EP 0 949 039 A1**
(43) Veröffentlichungstag der Anmeldung: **13.10.1999**
(21) Anmeldenummer: 99106835.4
(22) Anmeldetag: 06.04.1999
(51) Int. Cl.: B23K 35/38, B23K 103/10

(54) **Schutzgas zum WIG-Gleichstromschweissen von Aluminium**

(30) Priorität: 08.04.1998 DE 19815904; 15.07.1998 DE 19831833
(71) Anmelder: Linde Aktiengesellschaft, 65189 Wiesbaden (DE)
(72) Erfinder: Trube, Stefan Dr.-Ing., 81669 München (DE)
(74) Vertreter: Obermüller, Bernhard

(57) **Zusammenfassung**

Die Erfindung betrifft ein Schutzgas und ein Verfahren zum WIG-Gleichstromschweißen von Aluminiumwerkstoffen und Aluminiumlegierungen, wobei das Schutzgas der Schweißstelle zugeführt wird und wobei das Schutzgas im wesentlichen Helium oder ein Gemisch aus Helium und Argon enthält.

Erfindungsgemäß werden gute Schweißergebnisse mit einem Schutzgas erzielt, welches entweder neben Helium kein Argon und zumindest einen Anteil von 525 vpm bis 1000 vpm Stickstoff oder neben Helium und Argon zumindest einen Anteil von 500 vpm bis 1000 vpm Stickstoff enthält.

In Ausgestaltung der Erfindung enthält das Schutzgas zwischen 550 vpm und 750 vpm Stickstoff. Das Schutzgas weist bevorzugt zumindest 45 Vol.-% Helium auf. Dem Schutzgas können als aktive Komponenten 0,01 bis 1 Vol.-% Sauerstoff, Kohlendioxid oder einer Mischung aus Sauerstoff und Kohlendioxid zugemischt sein.

## Beschreibung

Die Erfindung betrifft ein Schutzgas zum WIG-Gleichstromschweißen von Aluminiumwerkstoffen umfassend Helium oder ein Gemisch aus Helium und Argon. Die Erfindung betrifft außerdem ein Verfahren zum WIG-Gleichstromschweißen von Aluminiumwerkstoffen, wobei ein Schutzgas der Schweißstelle zugeführt wird und wobei das Schutzgas Helium oder ein Gemisch aus Helium und Argon enthält.

Die Abkürzung WIG wird in Fachkreisen für das Wolfram-Inert-Gas-Schweißverfahren benützt. Darunter werden üblicherweise Schweißverfahren mit einer nichtabschmelzenden oder nichtabbrennenden Elektrode unter Einsatz eines Inertgases verstanden. Die nichtabschmelzende Elektrode (Dauerelektrode) besteht im allgemeinen aus Wolfram. Im Zusammenhang mit der vorliegenden Erfindung wird unter einem WIG-Schweißverfahren jedes Schweißverfahren mit nichtabschmelzender Elektrode verstanden. Üblicherweise brennt dabei der Lichtbogen frei zwischen der Elektrode und dem Werkstück.

Unter Aluminiumwerkstoffen werden im Rahmen der vorliegenden Erfindung alle bekannten Aluminiumwerkstoffe (in weiterem Sinne) verstanden, insbesondere auch Aluminium und/oder Aluminiumlegierungen. Auch das Verschweißen unterschiedlicher Aluminiumwerkstoffe soll mit der Erfindung umfaßt werden.

Aluminium setzt sich als Konstruktionswerkstoff immer stärker gegenüber Stahl durch. Dies liegt zu einem wesentlichen Teil an der Gewichtseinsparung, die eine Verwendung von Aluminium an Stelle von Stahlwerkstoffen ermöglicht.

Es sind einige Verfahrensvarianten des WIG-Schweißens mit Gleichstrom unter den erwähnten Schutzgasgemischen bekannt. Die Besonderheit des Schweißens von Aluminium resultiert aus der Eigenschaft des Aluminiums, an der Oberfläche sofort eine Oxidschicht zu bilden. Die Bildung eines festhaftenden Oxids an der Oberfläche ist Folge des unedlen Charakters von Aluminium. Das Schweißschutzgas hat die Aufgabe, die Strecke des elektrischen Lichtbogens zwischen Elektrode und Werkstück elektrisch leitend zu machen und sowohl das Schweißbad wie auch den abschmelzenden Schweißzusatz gegen die Atmosphäre zu schützen und eine ungewollte Oxidation zu verhindern. Argon ist das dabei am meisten verwendete Schutzgas. Argon-Helium-Gasgemische können trotz der an sich höheren Gaskosten von Vorteil sein. Dies liegt am Bestandteil Helium, der bessere Einbrandverhältnisse und höhere Schweißgeschwindigkeiten ermöglicht. Außerdem kann Helium zur Verminderung oder zur Vermeidung von Poren beitragen und den Verbrauch an Schweißzusatzwerkstoff reduzieren. Diese Vorteile von Helium im Vergleich zu Argon erklären sich durch den heißeren Lichtbogen und die günstigere Energieverteilung im Lichtbogen.

In jüngerer Zeit wurden dotierte Schutzgasgemische mit Zumischungen von weiteren Komponenten im vpm-Bereich bekannt.

Aus der DE 27 48 417 C2 ist ein Verfahren zur Verringerung von beim Schweißen gebildeten gesundheitsschädlichen Ozons durch Zugabe von 25 bis 50 vpm Stickoxid zu dem als Schutzgas verwendeten Argon beim WIG-Schweißen, aber auch beim MIG- und MAG-Schweißen bekannt.

Aus der DE 40 28 074 C1 bzw. der korrespondierenden EP 0 475 030 B1 ist bekannt, ein inertes Schutzgas aus Argon oder aus einem Argon-Helium-Gemisch mit einer Beimischung von 80 bis 250 vpm, vorzugsweise 120 bis 180 vpm mit einem Optimum bei 150 vpm Stickstoff, beim WIG-, MIG- und MAG-Schweißen von Aluminium einzusetzen. Beim WIG-Wechselstromschweißen dient dies der Ausbildung eines ruhigen, stabil brennenden und konzentrierten Lichtbogens und einer erhöhten Energieeinbringung. Oberhalb von 250 vpm Stickstoff treten störende Nebeneffekte wie Nahtverfärbungen (WIG-Schweißen) und ein Absacken der Kehlnähte (MIG-Schweißen) auf.

In der DE 41 06 900 A1 bzw. der korrespondierenden EP 0 502 318 B1 ist ein Schutzgasgemisch aus Argon oder einer oder mehreren Komponenten aus der Gruppe Helium, Wasserstoff, Sauerstoff und Kohlendioxid mit einer Beimischung von 80 bis 250 vpm Stickstoff, vorzugsweise 120 bis 180 vpm Stickstoff, bekannt, welches beim WIG-, MIG-, MAG- und Plasmaschweißen von Stahlwerkstoffen, Kupfer, Nickel und Aluminium eingesetzt werden kann. Das Schutzgas führt zu einer Einbrandintensivierung ohne Verschlechterung des Zwangslagenverhaltens.

Aus der DE 42 41 982 C1 bzw. der korrespondierenden EP 0 673 295 B1 ist bekannt, ein Schutzgas aus Argon oder aus einem Argon-Helium-Gemisch mit einer Beimischung von 80 bis 250 vpm Distickstoffoxid (Lachgas), vorzugsweise 120 bis 180 vpm Distickstoffoxid (mit einem Optimum um 150 vpm N₂O) beim WIG- und MIG-Schweißen von Aluminium einzusetzen. Beim WIG-Wechselstromschweißen soll das Schutzgas die Ausbildung eines ruhigen, stabil brennenden und konzentrierten Lichtbogens und eine erhöhte Energieeinbringung bewirken. Oberhalb von 250 vpm Distickstoffoxid treten störende Nebeneffekte wie Nahtverfärbungen (WIG-Schweißen) und ein starkes Durchsacken der Kehlnähte (MIG-Schweißen) auf.

In der DE 42 41 983 C1 bzw. der korrespondierenden EP 0 673 296 B1 ist ein inertes Schutzgas aus Argon oder aus einem Argon-Helium-Gemisch mit einer Beimischung von 80 bis 250 vpm N₂/N₂O, vorzugsweise 120 bis 180 vpm mit einem Optimum bei 150 vpm N₂/N₂O, beim WIG-, MIG- und MAG-Schweißen von Aluminium einzusetzen. Die Anteile von N₂ und N₂O im Schutzgas können im beliebigen Verhältnis stehen. Beim WIG-Wechselstromschweißen dient dies der Ausbildung eines ruhigen, stabil brennenden und konzentrierten Lichtbogens und einem erhöhten Energieeintrag. Oberhalb von 250 vpm N₂/N₂O treten störende Nebeneffekte wie Nahtverfärbungen (WIG-Schweißen) und ein Absacken der Kehlnähte (MIG-Schweißen) auf.

Aus der EP- 0 761 380 A1 bzw. der korrespondierenden US-A-5 667 703 ist ein Verfahren zum WIG-Wechselstromschweißen von Aluminium und Aluminiumlegierungen bekannt, bei welchem der Schweißstelle ein ternäres Schutzgasgemisch aus wenigstens 50 Vol.-% Helium, über 300 vpm Stickstoff und Argon als Rest (bevorzugt wenigstens 60 Vol.-% Helium, zwischen 300 und 1000 vpm Stickstoff und restlich Argon) zugeführt wird. Ausgehend von der Tatsache, daß Helium im Schutzgas einerseits die Umschaltung der Polung der Wolframelektrode von Emission auf Empfang aufgrund seiner gegenüber Argon geringen Förderung der Gasionisation erschwert, aber andererseits die Wirksamkeit des WIG-Schweißens von Aluminium unter Wechselstrom fördert, nämlich vor allem die Eindringtiefe beim Schweißen und die Kompaktheit der Schweißraupe vergrößert, soll durch diese vorgeschlagene Schutzgasmischung die positive Wirkung des Helium ausgenutzt werden, ohne daß die Lichtbogenstabilität oder die Schweißrate merklich beeinflußt wird.

In dem deutschen Gebrauchsmuster DE 296 23 194 U1 ist ein Schutzgas zum Lichtbogenschweißen (WIG-Wechselstromschweißen, MIG-Schweißen und Pulverplasmaschweißen) von Stahl und Nichteisenwerkstoffen wie Aluminium beschrieben, welches aus Argon oder einem Argon-Helium-Stickstoff- und gegebenenfalls Wasserstoff-Gemisch mit einer Beimischung zwischen 50 und 450 vpm Stickstoffmonoxid (vorzugsweise 280 bis 320 vpm NO) besteht. Eine konkret angegebene Zusammensetzung dieses Schutzgasgemisches umfaßt 150 vpm Stickstoff, 300 vpm Stickstoffmonoxid, 10 Vol.-% Helium und Argon als Rest. Das Schutzgas soll beim WIG-Wechselstromschweißen einen stabilen ruhigen Lichtbogen mit höherer Energieeinbringung und mit geringerer Schallemission, eine bessere Benetzung an den Nahtflanken, ein gutes Einbrandprofil und eine Schweißnaht mit sehr feinschuppigem Aussehen bewirken.

Aus der DE 40 07 673 C2 ist ein Verfahren zu zum WIG-Gleichstromschweißen von Aluminium mit negativ gepolter Elektrode bei freihändiger Brennerführung mit einem Schutzgas aus wenigstens 85 Vol.-% Helium und einem Restanteil von Argon bekannt.

Der vorliegenden Erfindung liegt die Aufgabe zugrunde, ein Schutzgas und zugehöriges Schweißverfahren aufzuzeigen, welche zu guten Schweißergebnissen führen. Dabei sollten gute Schweißeigenschaften gewährleistet werden. Beim WIG-Gleichstromschweißen mit negativ gepolter Elektrode tritt keine Reinigungswirkung der Oberfläche durch den elektrischen Strom auf. Daher sollte insbesondere dieser Nachteil gegenüber dem WIG-Wechselstromschweißen möglichst reduziert werden. Ferner sollte möglichst ein stabiler und ruhiger Lichtbogen mit hohem Energieeintrag, ein gutes Einbrandprofil, eine hohe Energieeinbringung, eine gute Qualität der Schweißnaht insbesondere ohne Poren bei hoher Schweißgeschwindigkeit erreicht werden.

Diese Aufgabe wird erfindungsgemäß dadurch gelöst, daß das Schutzgas entweder neben Helium kein Argon und zumindest einen Anteil von 525 vpm bis 1000 vpm Stickstoff oder neben Helium und Argon zumindest einen Anteil von 500 vpm bis 1000 vpm Stickstoff enthält.

Übertaschenderweise hat sich nämlich gezeigt, daß ein Schutzgas, das entweder neben Helium kein Argon (bis auf Verunreinigungen) und zumindest einen Anteil von 525 vpm bis 1000 vpm Stickstoff (d.h. zwischen 0,0525 und 0,10 Vol.-% N₂) oder neben Helium und Argon zumindest einen Anteil von 500 vpm bis 1000 vpm Stickstoff (d.h. zwischen 0,05 und 0,10 Vol.-% N₂) enthält, beim WIG-Gleichstromschweißen zu hervorragenden Schweißergebnissen führt. Insbesondere konnte mit stabilem und ruhigem Lichtbogen bei hoher Schweißgeschwindigkeit ein verbesserter Einbrand erzielt werden. Ferner war eine Reduktion des Schweißstroms möglich. Beim erfindungsgemäßen Schweißverfahren kann eine Beschädigung der Elektrodenspitze verhindert werden. Die Schweißungen weisen ein extrem niederes Niveau der Porenzahl auf. Auch dickwandige Bauteile können geschweißt werden, ohne daß Risse sich ausbilden.

Die Erfindung kann grundsätzlich bei allen WIG-Schweißverfahren unter Einsatz von Gleichstrom zum Einsatz kommen. Dies gilt insbesondere für das WIG-Gleichstromschweißen und das WIG-Impulsschweißen (d.h. Variation des Stromverlaufs beim WIG-Gleichstromschweißen) mit negativ gepolter Elektrode, wobei der Zusatzwerkstoff als Kalt- oder als Heißdraht zugeführt werden kann.

In Ausgestaltung der Erfindung enthält das Schutzgas zwischen 550 vpm und 750 vpm, bevorzugt zwischen 575 und 650 vpm Stickstoff.

Mit Vorteil kann das Schutzgas mindestens 45 Vol.-% Helium, bevorzugt mindestens 60 Vol.-% Helium, besonders bevorzugt 80 bis 95 Vol.-% Helium enthalten.

Das Schutzgas kann in Ausgestaltung der Erfindung 1 bis 40 Vol.-% Argon, bevorzugt 10 bis 35 Vol.-% Argon enthalten.

Dem Schutzgas können auch aktive Komponenten, insbesondere Sauerstoff und/oder Kohlendioxid, zugemischt sein. Dadurch kann die Schweißqualität zusätzlich erhöht werden. Insbesondere kann eine höhere Reinigungswirkung und/oder ein verbesserter (tiefer und/oder breiter) Einbrand erzielt werden. Hierzu kann das Schutzgas vorteilhafterweise 0,01 bis 1 Vol.-%, vorzugsweise 0,01 bis 0,2 Vol.-% , besonders bevorzugt 0,01 bis 0,1 Vol.-% Sauerstoff, Kohlendioxid oder einer Mischung aus Sauerstoff und Kohlendioxid enthalten, wobei das Schutzgas neben Helium und gegebenenfalls Argon einen Anteil von 500 vpm bis 1000 vpm Stickstoff enthält. Auch im Falle, daß das aktive Komponenten enthaltende Schutzgas bis auf Verunreinigungen kein Argon enthält, kann der Stickstoffanteil im Schutzgas zwischen 500 vpm und 1000 vpm liegen. Hervorragende Ergebnisse wurden beispielsweise mit 500 vpm Sauerstoff, mit 500 vpm Kohlendioxid und mit einer Zumischung von 300 vpm Sauerstoff und 200 vpm Kohlendioxid erzielt. Vor allem die Zugabe von Sauerstoff wirkt sich positiv auf das Schweißergebnis und die Qualität aus.

Das erfindungsgemäße Schutzgas kann beispielsweise beim Anwender vor Ort gemischt werden (auch ein Mischen mit mehreren Stufen ist möglich) oder als Fertiggemisch geliefert werden.

Im erfindungsgemäßen Verfahren kann grundsätzlich jede geeignete Stromquelle Verwendung finden. Insbesondere können thyristorgeregelte oder bevorzugt transistorisierte Stromquellen benutzt werden.

Vor dem Schweißen kann ein Bürsten der Oberfläche vorgesehen sein. Durch diese Maßnahme kann insbesondere eine glatte Nahtoberfläche erreicht werden.

Die Erfindung eignet sich zum Schweißen in allen Lagen, unter anderem auch für das Schweißen in Zwangslage.

Das erfindungsgemäße Schweißverfahren kann beim Schweißen unter mechanisierter Brennerführung oder unter Schweißbrennerführung von Hand angewendet werden.

Die Erfindung wurde beispielsweise an den Werkstoffen AlMgSi1 bzw. AlMg3Mn mit dem Zusatzwerkstoff S-AlSi5 angewendet.

## Patentansprüche

1. Schutzgas zum WIG-Gleichstromschweißen von Aluminiumwerkstoffen umfassend Helium oder ein Gemisch aus Helium und Argon,
**dadurch gekennzeichnet**, daß das Schutzgas entweder neben Helium kein Argon und zumindest einen Anteil von 525 vpm bis 1000 vpm Stickstoff oder neben Helium und Argon zumindest einen Anteil von 500 vpm bis 1000 vpm Stickstoff enthält.

2. Schutzgas nach Anspruch 1, dadurch gekennzeichnet, daß das Schutzgas zwischen 550 vpm und 750 vpm Stickstoff enthält.

3. Schutzgas nach Anspruch 1 oder 2, dadurch gekennzeichnet, daß das Schutzgas mindestens 45 Vol.-% Helium enthält.

4. Schutzgas nach einem der Ansprüche 1 bis 3, dadurch gekennzeichnet, daß das Schutzgas 1 bis 40 Vol.-% Argon enthält.

5. Schutzgas nach einem der Ansprüche 1 bis 4, dadurch gekennzeichnet, daß das Schutzgas 0,01 bis 1 Vol.-% Sauerstoff, Kohlendioxid oder einer Mischung aus Sauerstoff und Kohlendioxid enthält, wobei das Schutzgas neben Helium und gegebenenfalls Argon einen Anteil von 500 vpm bis 1000 vpm Stickstoff enthält.

6. Verfahren zum WIG-Gleichstromschweißen von Aluminiumwerkstoffen, wobei ein Schutzgas der Schweißstelle zugeführt wird und wobei das Schutzgas Helium oder ein Gemisch aus Helium und Argon enthält, **dadurch gekennzeichnet**, daß das Schutzgas entweder neben Helium kein Argon und zumindest einen Anteil von 525 vpm bis 1000 vpm Stickstoff oder neben Helium und Argon zumindest einen Anteil von 500 vpm bis 1000 vpm Stickstoff enthält.

7. Verfahren nach Anspruch 6, dadurch gekennzeichnet, daß das Schutzgas zwischen 550 vpm und 750 vpm Stickstoff enthält.

8. Verfahren nach Anspruch 6 oder 7, dadurch gekennzeichnet, daß das Schutzgas mindestens 45 Vol.-% Helium enthält.

9. Verfahren nach einem der Ansprüche 6 bis 8, dadurch gekennzeichnet, daß das Schutzgas 1 bis 40 Vol.-% Argon enthält.

10. Verfahren nach einem der Ansprüche 6 bis 9, dadurch gekennzeichnet, daß das Schutzgas 0,01 bis 1 Vol.-% Sauerstoff, Kohlendioxid oder einer Mischung aus Sauerstoff und Kohlendioxid enthält, wobei das Schutzgas neben Helium und gegebenenfalls Argon einen Anteil von 500 vpm bis 1000 vpm Stickstoff enthält.
